# EUROPÄISCHE PATENTSCHRIFT

(11) **EP 0 683 083 B1**
(45) Veröffentlichungstag und Bekanntmachung des Hinweises auf die Patenterteilung: **10.03.1999**
(21) Anmeldenummer: 95106969.9
(22) Anmeldetag: 09.05.1995
(51) Int. Cl.: B62B 3/14, B62B 3/18

(54) **Transportwagen**
Transport trolley
Chariot de transport

(30) Priorität: 18.05.1994 DE 4417418
(43) Veröffentlichungstag der Anmeldung: 22.11.1995
(73) Patentinhaber: Brüder Siegel GmbH + Co. KG, Draht- und Metallwarenfabrik, 89336 Leipheim (DE)
(72) Erfinder: Kugler, Rudolf, D-89343 Jettingen-Scheppach (DE)
(74) Vertreter: Grättinger & Partner (GbR)

(56) Entgegenhaltungen:
- DE-A- 3 402 944
- DE-A- 3 405 154
- DE-A- 4 015 194
- DE-U- 8 904 507
- FR-A- 1 423 726

## Beschreibung

Die vorliegende Erfindung betrifft einen Transportwagen, insbesondere Einkaufswagen, mit einem Behälter, von dem zumindest ein Abschnitt zwischen zwei Stellungen (relativ zu den übrigen Komponenten des Transportwagens) lageveränderbar ist, nämlich zwischen einer ersten Stellung, in der der Boden jenes lageveränderbaren Abschnitts des Behälters im wesentlichen horizontal verläuft, und einer zweiten Stellung, in der der Boden jenes lageveränderbaren Abschnitts des Behälters im wesentlichen vertikal verläuft, wobei diejenige Seitenwand des lageveränderbaren Abschnitts des Behälters, die in dessen zweiter Stellung oben liegt, verschwenkbar aufgehängt ist und in dieser Stellung eine Lage einnehmen kann, in der sie einen nach oben offenen Zugang zum Inneren des Behälters freigibt.

Aus dem US-Patent 4560180 ist ein derartiger Transportwagen bekannt. Der Behälter dieses Transportwagens umfaßt einen hinteren, (bezogen auf die übrigen Komponenten des Transportwagens) starren Abschnitt und einen vorderen, um eine horizontale Achse zwischen zwei Stellungen verschwenkbaren Abschnitt. Diejenige Seitenwand des vorderen Abschnitts des Behälters, die in dessen zweiter, hochgeschwenkter Stellung oben liegt, ist im Bereich ihrer Unterkante schwenk- und verschiebbar gelagert. Sie kann aus ihrer den vorderen Abschnitt des Behälters nach vorne verschließenden Stellung um etwa 90° nach vorne heruntergeklappt und in dieser Stellung unter den Boden des Behälters verschoben werden, um ein Entnehmen der Waren aus dem Behälter nach vorne hin zu erleichtern. Ferner kann die entsprechende Seitenwand auch um 180° nach unten geschwenkt werden. Wird der vordere Abschnitt des Behälters in seine zweite Stellung hochgeschwenkt und die vordere Seitenwand unter den Boden dieses Abschnittes des Behälters geschoben, ist der - hinsichtlich seiner Grundfläche entsprechend verkleinerte - Behälter von oben her zugänglich.

Aus dem französischen Patent 1 423 726 ist ein Transportwagen mit zwei übereinander angeordneten korbartigen Warenbehältern bekannt. Von beiden Behältern ist der in Fahrtrichtung vordere Abschnitt um eine horizontale, quer zur Fahrtrichtung verlaufende Achse nach oben verschwenkbar. Sind die lageveränderbaren Abschnitte beider Behälter nach oben verschwenkt, können mehrere Transportwagen platzsparend ineinander gestapelt werden. Bei dem unteren, größeren Behälter ist die vordere Seitenwand in der Gebrauchslage nach unten abklappbar; auf diese Weise können die in diesem Behälter angesammelten Waren diesem im Kassenbereich leich nach vorne entnommen werden. Der Behälter kann in seiner Ruhelage nicht zur Aufnahme von Gegenständen benutzt werden.

Die deutsche Offenlegungsschrift 34 05 154 offenbart einen Transportwagen, bei dem der Behälter, der als sich quer zur Fahrtrichtung erstreckender freitragender Korb gestaltet ist, aus einer waagerechten Gebrauchslage in eine nach unten gerichtete Ruhelage bewegbar ist. An den beiden oberen, der Öffnung benachbarten, quer zur Fahrtrichtung verlaufenden Längsrändern sind zwei Schlaufen vorgesehen, in denen eine feststehende, horizontal in Fahrtrichtung verlaufende Achse geführt ist. In der Ruhelage des Behälters weist dessen Öffnung seitwärts nach außen. Gegenstände können in dem in der Ruhelage befindlichen Behälter nicht aufgenommen werden, ohne daß die Gefahr besteht, daß sie seitlich herausfallen.

Durch offenkundige Vorgenutzung ist ein weiterer Transportwagen ("Einkaufs- und Lagertransporter T 50 W" der Fa. Wanzl, Leipheim) bekanntgeworden, dessen korbartiger Behälter als ganzes aus einer ersten Stellung mit horizontalem Boden in eine zweite Stellung mit vertikalem Boden verschwenkbar ist. Die dem Boden des Behälters gegenüberliegende Öffnung weist in der zweiten Stellung nach hinten; sie ist dann in ihrem unteren Bereich durch ein Klappgitter teilweise verschließbar. Der Behälter ist auf diese Weise in beiden Stellungen zur Aufnahme von Gegenständen nutzbar, wobei in der zweiten, platzsparenden Stellung eine deutlich geringere Grundfläche zum Abstellen von Gegenständen (z. B. stehende Flaschen) zur Verfügung steht als in der ersten Stellung. Allerdings ist das Be- und Entladen des Behälters in der zweiten Stellung schwierig, wenn das Klappgitter zu groß ist; umgekehrt besteht bei zu kleinem Klappgitter die Gefahr, daß Gegenstände aus dem Behälter nach hinten herausfallen.

Aus der europäischen Patentanmeldung 337 043 ist ein weiterer Transportwagen bekannt, bei dem der Behälter als ganzes aus einer im wesentlichen horizontalen Gebrauchslage in eine im wesentlichen vertikale Ruhelage bewegbar ist. Hierzu sind zu beiden Seiten des Transportwagens Führungen vorgesehen, in denen hintenunten am Behälter vorgesehene Vorsprünge geführt werden. In der Ruhelage des Behälters weist dessen Öffnung nach hinten. Die Transportwagen sind nicht nur dann stapelbar, wenn sich die Behälter in ihrer Ruhelage befinden; die schwenkbare Aufhängung der Rückwand des Behälters gestattet - in von üblichen Einkaufswagen her bekannter Weise - das Stapeln mehrerer Transportwagen auch dann, wenn die Behälter sich in Gebrauchslage befinden, indem der Behälter des jeweils hinteren Transportwagens von hinten her in den Behälter des jeweils vorderen Transportwagens eingeschoben wird. In der Ruhelage des Behälters können in diesem Gegenstände nicht transportiert werden.

Durch offenkundige Vorbenutzung sowie die deutsche Patentschrift 34 45 685 ist schließlich ein Möbeltransportwagen bekanntgeworden, dessen Behälter als geteilter, aus zwei Abschnitten bestehender Klappkorb ausgebildet ist. In der Gebrauchslage erstreckt sich der Behälter quer zur Fahrtrichtung zwischen zwei rückseitig am Transportwagen angeordneten Bügeln. Dabei ist ein Abschnitt des Behälters fest an dem entsprechenden Bügel angeordnet; ein lageveränderbarer Abschnitt des Behälters ist mit dem feststehenden Abschnitt um eine horizontale, in Fahrtrichtung verlaufende Achse schwenkbar verbunden. Sollen sperrige Güter transportiert werden, wird der lageveränderbare Abschnitt des Behälters aus seiner ersten Stellung nach oben in eine zweite Stellung geklappt. In dieser Ruhestellung umschließt der lageveränderbare Abschnitt im wesentlichen den feststehenden Abschnitt des Behälters. Das Innere des Behälters ist in dessen Ruhelage nur durch eine kleine Öffnung von oben her zugänglich; eine Nutzung des Behälters zum Transport von Gegenständen scheidet daher praktisch aus, wenn sich der lageveränderbare Abschnitt des Behälters in seiner zweiten Stellung befindet.

Bei allen vorstehend angegebenen Transportwagen ist es von Nachteil, daß der Behälter dann, wenn sich sein lageveränderbarer Abschnitt in seiner (platzsparenden) zweiten Stellung befindet, entweder überhaupt nicht oder aber nur sehr eingeschränkt nutzbar ist, weil entweder kein Zugang zum Inneren des Behälters besteht, oder aber die Öffnung zu dem Behälter entweder klein ist oder nur von der Seite her Zugang zum Inneren des Behälters gewährt.

Der vorliegenden Erfindung liegt die Aufgabe zugrunde, einen gattungsgemäßen Transportwagen zu schaffen, bei dem der Behälter auch dann ohne Schwierigkeiten und bequem nutzbar ist, wenn sich sein lageveränderbarer Abschnitt in seiner (platzsparenden) zweiten Stellung befindet. Insbesondere soll der Behälter auch in diesem Falle ohne irgendeinen zusätzlichen Aufwand durch eine große Öffnung von oben her bequem zugänglich sein.

Gemäß der vorliegenden Erfindung wird diese Aufgabe bei einem gattungsgemäßen Transportwagen dadurch gelöst, daß die verschwenkbar aufgehängte Seitenwand des Behälters im Bereich ihrer Oberkante aufgehängt ist, so daß sie infolge der Schwerkraft nach unten in das Innere des Behälters hineinschwenkt, wenn dessen lageveränderbarer Abschnitt in die zweite Stellung gebracht wird. Dabei wird selbsttätig ein nach oben hin offener Zugang zum Inneren des Behälters freigegeben. Gemäß der Erfindung ist somit diejenige Seitenwand des lageveränderbaren Abschnitts des Behälters, die dann, wenn dieser Abschnitt seine (platzsparende) zweite Stellung einnimmt, oben liegt, in der Weise verschwenkbar aufgehängt, daß sie aufgrund der Schwerkraft selbsttätig als ganzes einschwenkt, wenn der lageveränderbare Abschnitt des Behälters von seiner ersten in seine zweite Stellung gebracht wird. Hierdurch entsteht eine oben angeordnete Öffnung des Behälters in seiner zweiten Stellung; d. h. der Behälter ist auch in dieser Stellung von oben her bequem zugänglich. Bei dem erfindungsgemäßen Transportwagen ist der Behälter somit unabhängig davon, ob er seine erste oder seine (platzsparende) zweite Stellung einnimmt, stets von oben her frei zugänglich. Er kann bequem von oben her beladen und nach oben entladen werden.

Bei dem erfindungsgemäßen Transportwagen ist die in der zweiten Stellung des Behälters seitlich angeordnete, dem Boden gegenüberliegende eigentliche Öffnung des lageveränderbaren Abschnitts des Behälters zweckmäßigerweise durch eine feststehende Wand zumindest teilweise abgeschlossen. Hierdurch wird verhindert, daß in dem Behälter in seiner zweiten Stellung aufgenommene Gegenstände durch die dann seitlich angeordnete eigentliche Öffnung des lageveränderbaren Abschnitts des Behälters herausfallen können. Die feststehende Wand kann dabei entweder ein Teil des feststehenden Abschnitts des Behälters sein, insbesondere eine von dessen Seitenwänden. Als die eigentliche Öffnung des lageveränderbaren Abschnitts des Behälters in dessen zweiter Stellung abschließende Wand kommen jedoch in gleicher Weise gesonderte Bauelemente (z. B. ein Blech oder ein Gitter) in Betracht, die am Transportwagen fest angeordnet sind.

Die Erfindung ist sowohl für solche Transportwagen anwendbar, bei denen der Behälter als ganzes lageveränderbar aufgehängt ist, wie dies beispielsweise für den Transportwagen gemäß der deutschen Offenlegungsschrift 34 05 154 zutrifft. In gleicher Weise ist die vorliegende Erfindung anwendbar auf Transportwagen, bei denen nur ein Abschnitt des Behälters lageveränderbar, ein weiterer Abschnitt hingegen feststehend ist, wie dies beispielsweise für den durch die DE-PS 34 45 685 sowie durch offenkundige Vorbenutzung bekanntgewordenen Möbeltransportwagen oder den Transportwagen gemäß der FR-PS 1 423 726 zutrifft. Bei einer besonders bevorzugten Weiterbildung des erfindungsgemäßen Transportwagens mit der zuletzt genannten Ausbildung des Behälters taucht in der zweiten Stellung der lageveränderbare Abschnitt des Behälters in den feststehenden ein oder umgekehrt. Bei einer derartigen Ausgestaltung des erfindungsgemäßen Transportwagens beansprucht der Behälter, wenn er seine zweite Stellung einnimmt, nur minimalen Platz.

Eine bevorzugte Weiterbildung der Erfindung ist dadurch gekennzeichnet, daß der als ganzes lageveränderbare Behälter bzw. dessen lageveränderbarer Abschnitt um eine horizontal, quer zur Fahrtrichtung verlaufende Achse verschwenkbar aufgehängt ist. Dieses Merkmal gestattet auf besonders einfache Weise ein selbsttätiges Einschwenken des Behälters aus seiner ersten Stellung in seine platzsparende zweite Stellung, wenn zwei Transportwagen gestapelt werden. Besonders begünstigt wird das selbsttätige Einschwenken des lageveränderbaren Abschnitts des Behälters durch eine schräg nach oben-vorne weisende Ausrichtung der in Fahrtrichtung weisenden Seitenwand des lageveränderbaren Abschnitts des Behälters. Denn bei der zuletzt genannten Weiterbildung des erfindungsgemäßen Transportwagens trifft der lageveränderbare Abschnitt des Behälters mit seiner vorderen, oberen, quer zur Fahrtrichtung verlaufenden Kante beim Stapeln zweier Transportwagen auf ein Bauteil des jeweils vorderen Transportwagens, wodurch ein den Behälter kippendes Moment erzeugt wird.

Im folgenden wird die Erfindung anhand der in der Zeichnung dargestellten Ausführungsbeispiele näher erläutert. Es zeigt
- Fig. 1: in Seitenansicht zwei ineinander gestapelte Transportwagen gemäß der Erfindung, wobei sich der Behälter des vorderen Transportwagens in seiner ersten Stellung und der Behälter des hinteren Transportwagens in seiner zweiten Stellung befindet,
- Fig. 2 und 3: in Seitenansicht bzw. Draufsicht den Behälter des Transportwagens gemäß Fig. 1 in seiner ersten Stellung,
- Fig. 4 und 5: in Seitenansicht bzw. Draufsicht den Behälter des Transportwagens gemäß Fig. 1 in seiner zweiten Stellung und
- Fig. 6: in perspektivischer Ansicht ein weiteres Ausführungsbeispiel des erfindungsgemäßen Transportwagens.

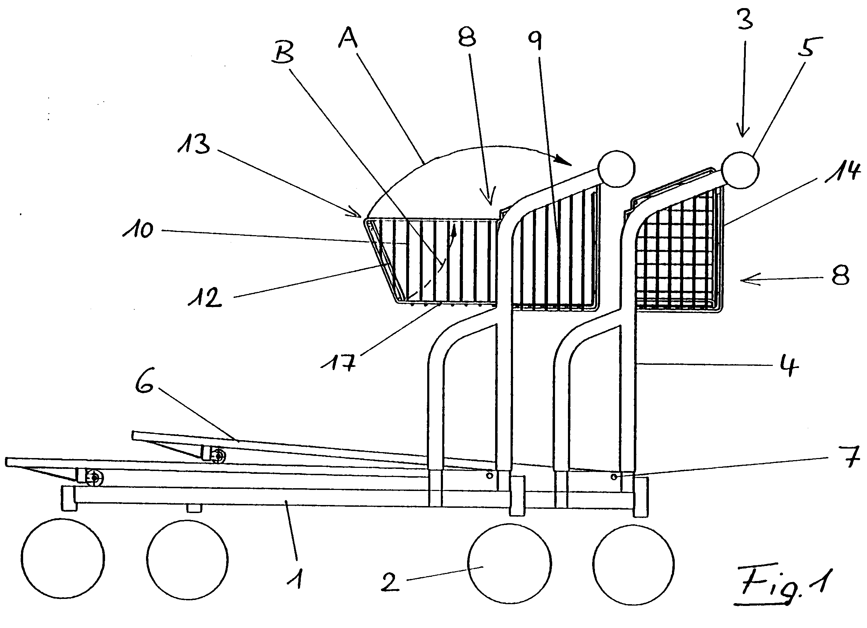

Der grundsätzliche Aufbau des in Fig. 1 dargestellten Transportwagens ist allgemein bekannt. Jeder Transportwagen umfaßt ein Fahrgestell 1 mit vier Rädern 2. Rückseitig an dem Fahrgestell 1 ist jeweils eine Schiebeeinrichtung 3 vorgesehen, die eine zwei seitliche Träger 4 miteinander verbindende Griffstange 5 umfaßt. An dem Fahrgestell 1 ist eine Plattform 6 um eine horizontale, quer zur Fahrtrichtung verlaufende Achse 7 verschwenkbar angelenkt. Die verschwenkbare Anlenkung der Plattform gestattet das Stapeln zweier Transportwagen, indem die Plattform des jeweils hinteren Transportwagens auf diejenige des jeweils vorderen Transportwagens aufgleitet und dabei geringfügig angehoben wird.

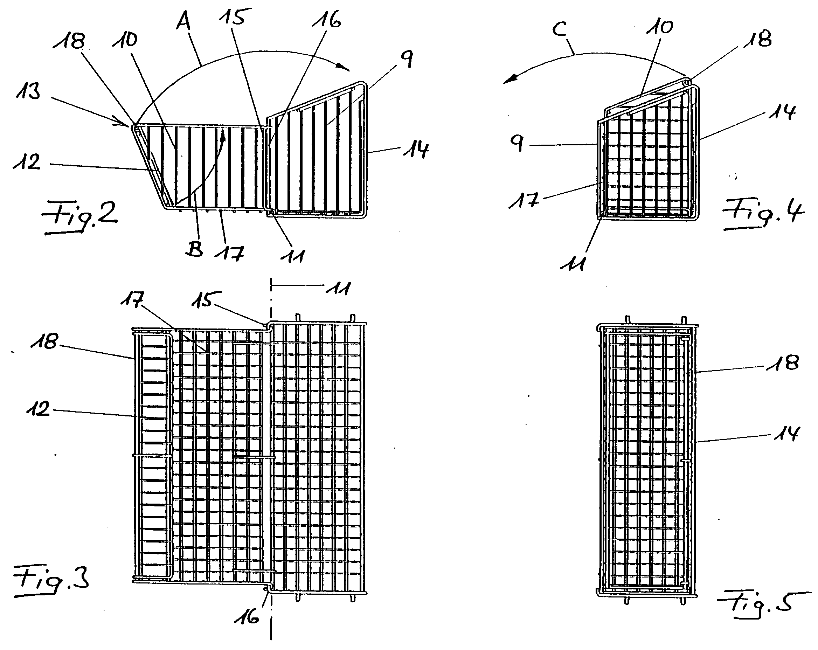

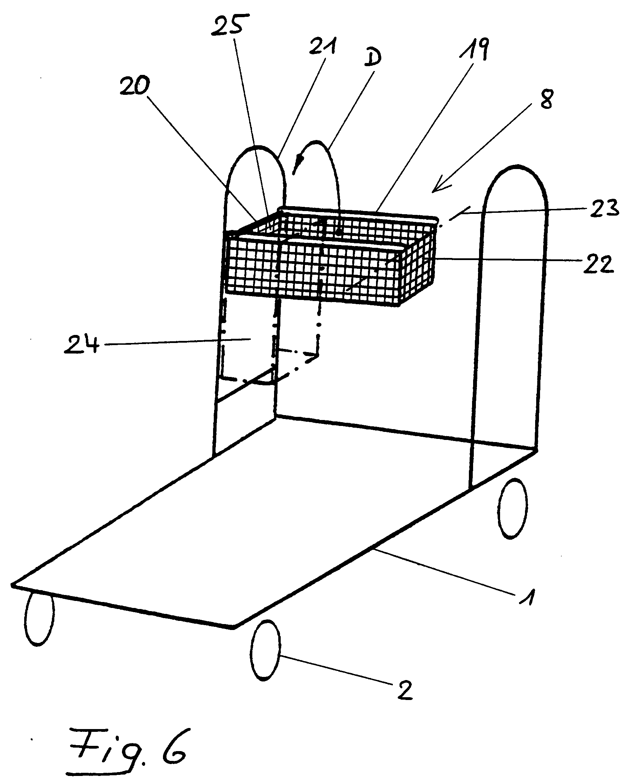

Zwischen den beiden Trägern 4 ist ein als Korb ausgebildeter Behälter 8 befestigt. Dieser umfaßt einen feststehenden Abschnitt 9 und einen lageveränderbaren Abschnitt 10. Der lageveränderbare Abschnitt 10 des Behälters 8 ist an dem feststehenden Abschnitt 9 um eine horizontale Achse 11 (vgl. Fig. 2 bis 5) verschwenkbar gelagert. Beim Stapeln zweier Transportwagen wird der lageveränderbare Abschnitt 10 des Behälters 8 des hinteren Transportwagens um die Achse 11 nach oben geschwenkt (Pfeil A). Hierdurch wird der Behälter von seiner ersten Stellung (Fig. 2 und 3) in seine zweite Stellung (Fig. 4 und 5) gebracht. Indem die in Fahrtrichtung vordere Seitenwand 12 des Behälters 8 in Fahrtrichtung schräg nach vorne-oben verläuft, trifft die vordere, obere, quer zur Fahrtrichtung verlaufende Kante 13 des lageveränderbaren Abschnitts 10 des Behälters 8 beim Einschieben eines Transportwagens in einen Stapel zuerst auf die Rückwand 14 des feststehenden Abschnitts 9 des Behälters des vorausbefindlichen Transportwagens; hierdurch wirkt auf den lageveränderbaren Abschnitt 10 des Behälters ein Moment bezüglich der Schwenkachse 11, so daß beim Stapeln zweier Transportwagen der lageveränderbare Abschnitt des Behälters des hinteren Transportwagens selbsttätig in die platzsparende, der zweiten Stellung des Behälters entsprechende aufrechte Position verschwenkt wird (Pfeil A).

In den Fig. 2 bis 5 ist der Aufbau des bei den Transportwagen gemäß Fig. 1 vorgesehenen Behälters 8 detaillierter dargestellt. Insbesondere ist in diesen Figuren erkennbar, daß an dem lageveränderbaren Abschnitt 10 des Behälters beidseitig je ein Anschlag 15 vorgesehen ist, der die Stellung des lageveränderbaren Abschnitts 10 in der ersten Stellung des Behälters definiert, indem er eine vertikale Strebe 16 des feststehenden Abschnitts 9 des Behälters umgreift.

Wird der lageveränderbare Abschnitt 10 des Behälters um die Achse 11 nach oben geschwenkt (Pfeil A), so daß der Behälter aus seiner ersten Stellung (Fig. 2 und 3) in seine zweite Stellung (Fig. 4 und 5) gebracht wird, nimmt der Boden 17 des lageveränderbaren Abschnitts 10 des Behälters eine vertikale Lage ein; er bildet in der zweiten Stellung des Behälters dessen vordere Seitenwand. Die dem Boden 17 des lageveränderbaren Abschnitts des Behälters gegenüberliegende eigentliche Öffnung, die in der ersten Stellung des Behälters nach oben, in der zweiten Stellung hingegen nach hinten weist, ist in der zweiten Stellung des Behälters durch die hintere Seitenwand 14 des feststehenden Abschnitts 9 des Behälters abgedeckt.

Die vordere Seitenwand 12 des lageveränderbaren Abschnitts 10 des Behälter ist im Bereich der oberen, quer zur Fahrtrichtung verlaufenden Längskante 13 um eine horizontale Achse 18 verschwenkbar aufgehängt. Dies ermöglicht ein Einschwenken der vorderen Seitenwand 12 in das Innere des lageveränderbaren Abschnitts 10 des Behälters (Pfeil B). Wird der lageveränderbare Abschnitt 10 um die Achse 11 herum aus der ersten Stellung (Fig. 2 und 3) in die zweite Stellung (Fig. 4 und 5) verschwenkt (Pfeil A), verschwenkt sich die vordere Seitenwand 12 des lageveränderbaren Abschnitts 10 aufgrund der Schwerkraft selbsttätig in eine Stellung, in der sie unmittelbar benachbart der Rückwand 14 des feststehenden Abschnitts 9 des Behälters liegt. Auf diese Weise ist auch der raumsparend zusammengeklappte Behälter in seiner zweiten Stellung bequem von oben her zugänglich, denn seine nach oben weisende Öffnung erstreckt sich über die gesamte Breite und Tiefe des zusammengeklappten Behälters. Auch in der zweiten Stellung ist der Behälter an allen vier Seiten durch den Boden 17 und die Seitenwände des lageveränderbaren Abschnitts 10 sowie die Rückwand 14 des feststehenden Abschnitts 9 hoch geschlossen, so daß Gegenstände aus ihm nicht herausfallen können. Wird der Behälter aus seiner zweiten Stellung in seine erste Stellung gebracht (Pfeil C), verschwenkt sich die vordere Seitenwand 12 des lageveränderbaren Abschnitts 10 des Behälters wieder selbsttätig in ihre in den Fig. 1, 2 und 3 dargestellte Stellung.

Der in Fig. 6 dargestellte Transportwagen ist von seinem grundsätzlichen Aufbau her identisch mit dem Transportwagen gemäß der deutschen Offenlegungsschrift 34 05 154. Der korbartige Behälter 8 weist an seinen beiden oberen, quer zur Fahrtrichtung verlaufenden Längskanten je eine Schleife 19 auf. Diese beiden Schleifen 19 sind an einer Achse 20 geführt, die sich horizontal in Fahrtrichtung erstreckt und zwischen den beiden Schenkeln eines der beiden Bügel 21 befestigt ist. Der Behälter 8 kann angehoben und in eine platzsparende vertikale - strichpunktiert dargestellte - zweite Stellung gebracht werden (Pfeil D). Im Hinblick auf weitergehende Details wird auf die deutsche Offenlegungsschrift 34 05 154 verwiesen, auf deren Offenbarungsgehalt insoweit Bezug genommen wird.

Die Seitenwand 22 des Behälters 8, die in der zweiten Stellung des Behälter nach oben weist, ist um eine horizontale, in Fahrtrichtung verlaufende Achse 23 verschwenkbar aufgehängt. Wird der Behälter aus seiner horizontalen ersten Stellung in die - strichpunktiert dargestellte - zweite Stellung bewegt (Pfeil D), verschwenkt sich die Seitenwand 22 selbsttätig um die Achse 23 in das Innere des Behälters und gibt auf diese Weise einen Zugang von oben zu dem Behälter in der zweiten Stellung frei. Die eigentliche, dem Boden des Behälters gegenüberliegende Öffnung des Behälters ist in dessen zweiter Stellung von einer Wand 24 verschlossen, die zwischen den beiden Schenkeln des Bügels 21 vorgesehen ist. Diejenige Seitenwand 25 des Behälters, die der verschwenkbaren Seitenwand 22 gegenüberliegt und in der ersten Stellung des Behälters dem Bügel 21 benachbart ist, bildet in der zweiten Stellung des Behälters dessen Boden.

Auch bei der in Fig. 6 dargestellten Ausführungsform des erfindungsgemäßen Transportwagens ergibt sich somit in der platzsparenden zweiten Stellung des Behälters die Möglichkeit, diesen bequem durch eine Öffnung von maximaler Größe von oben her zu beladen, wobei keine Gefahr gesteht, daß die in dem Behälter aufgenommenen Gegenstände aus diesem herausfallen.

## Patentansprüche

1. Transportwagen, insbesondere Einkaufswagen, mit einem Behälter (8), von dem zumindest ein Abschnitt (10) zwischen zwei Stellungen lageveränderbar ist, nämlich zwischen einer ersten Stellung, in der der Boden (17) jenes lageveränderbaren Abschnitts (10) des Behälters (8) im wesentlichen horizontal verläuft, und einer zweiten Stellung, in der der Boden jenes lageveränderbaren Abschnitts des Behälters im wesentlichen vertikal verläuft, wobei diejenige Seitenwand (12, 22) des lageveränderbaren Abschnitts (10) des Behälters (8), die in dessen zweiter Stellung oben liegt, verschwenkbar aufgehängt ist und in dieser Stellung eine Lage einnehmen kann, in der sie einen nach oben offenen Zugang zum Inneren des Behälters freigibt,
dadurch gekennzeichnet,
daß die verschwenkbar aufgehängte Seitenwand (12, 22) des Behälters im Bereich ihrer Oberkante aufgehängt ist, so daß sie infolge der Schwerkraft nach unten in das Innere des Behälters (8) hineinschwenkt, wenn dessen lageveränderbarer Abschnitt (10) in die zweite Stellung gebracht wird.

2. Transportwagen nach Anspruch 1,
dadurch gekennzeichnet,
daß die verschwenkbar aufgehängte Seitenwand (12, 22) des Behälters in dessen zweiter Stellung parallel zu dessen Boden (17) verläuft.

3. Transportwagen nach Anspruch 1,
dadurch gekennzeichnet,
daß der Behälter (8) einen feststehenden Abschnitt (9) und einen lageveränderbaren Abschnitt (10) umfaßt, wobei in der zweiten Stellung der lageveränderbare Abschnitt in den feststehenden Abschnitt eintaucht.

4. Transportwagen nach Anspruch 3,
dadurch gekennzeichnet,
daß der lageveränderbare Abschnitt (10) des Behälters (8) um eine horizontale Achse (11) verschwenkbar an dem feststehenden Abschnitt des Behälters aufgehängt ist.

5. Transportwagen nach Anspruch 1,
dadurch gekennzeichnet,
daß der Behälter (8) als ganzes lageveränderbar aufgehängt ist und daß eine feststehende, im wesentlichen vertikal verlaufende Wand (24) vorgesehen ist, die in der zweiten Stellung des Behälters (8) dessen dem Boden (17) gegenüberliegende eigentliche Öffnung zumindest teilweise verschließt.

6. Transportwagen nach Anspruch 1,
dadurch gekennzeichnet,
daß der als ganzes lageveränderbare Behälter (8) bzw. dessen lageveränderbarer Abschnitt um eine horizontal, quer zur Fahrtrichtung verlaufende Achse (11) verschwenkbar aufgehängt ist.

7. Transportwagen nach Anspruch 6,
dadurch gekennzeichnet,
daß die in der ersten Stellung des Behälters in Fahrtrichtung des Transportwagens vorne angeordnete Seitenwand (12) des Behälters schräg nach vorne-oben geneigt verläuft.

## Claims

1. Transport trolley, in particular shopping trolley, with a container (8), of which at least one section (10) is displaceable between two positions, namely between a first position, in which the base (17) of that displaceable section (10) of the container (8) extends essentially horizontally, and a second position, in which the base of that displaceable section of the container extends essentially vertically, in which case that side wall (12, 22) of the displaceable section (10) of the container (8), which is located at the top in its second position, is suspended to tilt and in this position may adopt an attitude in which it allows access from the top to the inside of the container, characterised in that the tiltably suspended side wall (12, 22) of the container is suspended in the region of its upper edge, so that as a result of gravity it tilts downwards into the inside of the container (8), when its displaceable section (10) is brought into the second position.

2. Transport trolley according to Claim 1, characterised in that the tiltably suspended side wall (12, 22) of the container extends parallel to its base (17), in its second position.

3. Transport trolley according to Claim 1, characterised in that the container (8) has a stationary section (9) and a displaceable section (10), in the second position the displaceable section fitting in the stationary section.

4. Transport trolley according to Claim 3, characterised in that the displaceable section (10) of the container (8) is suspended on the stationary section of the container to tilt about a horizontal axis (11).

5. Transport trolley according to Claim 1, characterised in that the container (8) as a whole is suspended in a displaceable manner and that a stationary, essentially vertically extending wall (24) is provided, which in the second position of the container (8) at least partly closes off its actual opening lying opposite the base (17).

6. Transport trolley according to Claim 1, characterised in that the container (8) which is displaceable as a whole, or its displaceable section is suspended to tilt about an axis (11) extending horizontally, at right angles to the direction of travel.

7. Transport trolley according to Claim 6, characterised in that the side wall (12) of the container, located at the front in the direction of travel of the transport trolley, in the first position of the container, extends obliquely forwards in an upwardly inclined manner.

## Revendications

1. Chariot de transport, en particulier chariot d'achat, comprenant un conteneur (8), dont au moins une partie (10) peut être réglée dans deux positions, à savoir dans une première position, dans laquelle le fond (17) de ladite partie réglable (10) du conteneur (8) est essentiellement horizontal, et une seconde position, dans laquelle le fond de la partie réglable du conteneur est essentiellement vertical, la paroi latérale (12, 22) de la partie réglable (10) du conteneur (8) qui, dans la seconde position, se trouve sur le dessus, étant montée avec possibitité de pivotement et pouvant prendre, ainsi placée, une position dans laquelle elle libère un accès ouvert vers le haut vers l'intérieur du conteneur, caractérisé par le fait que la paroi latérale montée pivotante (12, 22) du conteneur est suspendue dans la région de son bord supérieur de telle sorte qu'elle pivote sous l'action de la pesanteur, vers le bas, à l'intérieur du conteneur (8), lorsqu'on amène la partie réglable (10) dudit conteneur dans la seconde position.

2. Chariot de transport selon la revendication 1, caractérisé par le fait que la paroi montée pivotante (12, 22) du conteneur, dans la seconde position de ce dernier, est parallèle au fond (17) dudit conteneur.

3. Chariot de transport selon la revendication 1, caractérisé par le fait que le conteneur (8) comprend une partie (9) fixe et une partie (10) réglable en position, la partie réglable rentrant dans la partie fixe, dans la seconde position.

4. Chariot de transport selon la revendication 3, caractérisé par le fait que la partie réglable (10) du conteneur (8) est montée pivotante autour d'un axe (11) horizontal sur la partie fixe du conteneur.

5. Chariot de transport selon la revendication 1, caractérisé par le fait que le conteneur (8) est monté réglable en position en tant qu'ensemble complet et qu'il est prévu une paroi (24) fixe essentiellement verticale qui, dans la seconde position du conteneur (8) ferme au moins partiellement l'ouverture de celui-ci située en vis-à-vis du fond (17).

6. Chariot de transport selon la revendication 1, caractérisé par le fait que le conteneur (8) réglable en position en tant qu'ensemble complet ou la partie réglable de celui-ci est monté pivotant autour d'un axe horizontal (11) transversalement à la direction de déplacement.

7. Chariot de transport selon la revendication 6, caractérisé par le fait que la paroi latérale (12) du conteneur disposée à l'avant dans la direction de déplacement dans la première position du conteneur est inclinée vers l'avant et vers le haut.
